# EUROPÄISCHE PATENTANMELDUNG

(11) **EP 3 009 254 A2**
(43) Veröffentlichungstag der Anmeldung: **20.04.2016**
(21) Anmeldenummer: 15186321.4
(22) Anmeldetag: 22.09.2015
(51) Int. Cl.: B29C 65/14

(54) **KUNSTSTOFF-VORWÄRMANORDNUNG FÜR EINE KUNSTSTOFFSCHWEISSVORRICHTUNG, KUNSTSTOFFSCHWEISSVORRICHTUNG SOWIE VORWÄRMVERFAHREN FÜR EIN BAUTEIL**

(30) Priorität: 17.10.2014 DE 102014221139
(71) Anmelder: Branson Ultraschall Niederlassung der Emerson Technologies GmbH & Co. oHG, 63128 Dietzenbach (DE)
(72) Erfinder: Knecht, Gerrit, 64354 Reinheim (DE); Fuchs, Silvio, 63594 Hasselroth (DE)
(74) Vertreter: HWP Intellectual Property

(57) **Zusammenfassung**

Die Kunststoff-Vorwärmanordnung (1) für eine Kunststoffschweißvorrichtung (3) umfasst einen Träger (10), mindestens eine erste Vorwärmvorrichtung (40) und eine Schwenk-Anordnung mit der die mindestens eine erste Vorwärmvorrichtung (40) relativ zu einer ersten Oberfläche des Trägers (10) von einer Ausgangsposition in eine Vorwärmposition schwenkbar ist. Auf diese Weise ist ein Hinterschnitt eines ersten Bauteils (60) umfahrbar und das erste Bauteil (60) ist mittels der ersten Vorwärmvorrichtung (40) erwärmbar.

## Beschreibung

Die vorliegende Erfindung betrifft eine Kunststoff-Vorwärmanordnung für eine Kunststoffschweißvorrichtung, eine Kunststoffschweißvorrichtung sowie ein entsprechendes Vorwärmverfahren für ein Bauteil in einer Kunststoffschweißvorrichtung.

Kunststoffschweißvorrichtungen mit Vorwärmanordnung umfassen üblicherweise ein Gehäuse mit einem darin angeordneten Unterwerkzeug sowie einem darin angeordnetem Oberwerkzeug. Das Unterwerkzeug ist an einem Hubtisch befestigt, wohingegen das Oberwerkzeug starr an einer Oberwerkzeugplatte befestigt ist. Mittels des Hubtischs kann das Unterwerkzeug in Richtung des Oberwerkzeugs verfahren werden, um ein erstes Bauteil im Unterwerkzeug mit einem zweiten Bauteil im Oberwerkzeug zu verschweißen, beispielsweise mittels Reibschweißen. Mit der Vorwärmanordnung können üblicherweise das erste und das zweite Bauteil vor dem Verschweißen erwärmt werden. Allgemein ist die Vorwärmanordnung hierbei an den Hubtisch gekoppelt.

Derartige Kunststoffschweißvorrichtungen werden zum Beispiel in der Automobilindustrie oder in der Medizintechnik eingesetzt. In der Automobilindustrie werden solche Kunststoffschweißvorrichtungen zur Herstellung von Leuchten eingesetzt, können aber auch bei der Herstellung anderer Bauteile oder Bauteilgruppen genutzt werden, die aus Kunststoffen bestehen oder Kunststoffe enthalten. In ähnlicher Weise kann die Kunststoffschweißvorrichtung bei der Herstellung von Geräten und/oder Bauteilgruppen in der Medizintechnik oder bei der Herstellung von Konsumgütern Verwendung finden.

Der Arbeitsablauf bei der bekannten Kunststoffschweißvorrichtung mit Vorwärmanordnung ist wie folgt. Ein Bediener legt zunächst ein erstes Bauteil in die Aufnahme des Unterwerkzeugs ein. Anschließend positioniert er ein zweites Bauteil auf dem ersten Bauteil im Unterwerkzeug. Dann fährt der Hubtisch mit dem Unterwerkzeug und den darauf angeordneten Bauteilen aus einer Anfangsposition in Richtung des Oberwerkzeugs, bis das zweite Bauteil im Oberwerkzeug anliegt. Nun fährt der Hubtisch zurück in eine Position, in der die Vorwärmanordnung aus einer Ruheposition in einer Ausrichtposition zwischen den beiden Bauteilen angeordnet werden kann. Nachdem die Vorwärmanordnung zwischen den beiden Bauteilen angeordnet wurde wird durch ein Verfahren des Hubtischs die Vorwärmanordnung in einer Vorwärmposition so positioniert, dass die beiden Bauteile an den zu verschweißenden Stellen erwärmbar sind. Nach dem Erwärmen wird die Vorwärmanordnung zurück in die Ausrichtposition verfahren und dann in die Ruheposition. Danach wird der Hubtisch in eine Schweißposition verfahren. Nun erfolgt ein Verschweißen des ersten Bauteils mit dem zweiten Bauteil mittels Reibschweißen oder mittels Aneinanderdrücken der vorgewärmten Bauteile. Nach Beendigung des Verschweißens fährt der Hubtisch mit dem Unterwerkzeug und dem darin angeordnetem Verbund aus erstem und zweitem Bauteil von der Schweißposition zurück in die Anfangsposition. Nun kann der Bediener den Verbund aus erstem und zweitem Bauteil entnehmen.

Ein Nachteil der oben beschriebenen Kunststoffschweißvorrichtung mit Vorwärmanordnung wird ersichtlich, wenn Bauteile mit komplexen Vorsprüngen bzw. Hinterschnitten erwärmt und verschweißt werden sollen. Da die Kunststoff-Vorwärmanordnung nach dem Erreichen der Ausrichtposition nur in vertikaler Position verfahren wird, würde der Versuch ein solches Bauteil zu erwärmen zur Beschädigung oder Zerstörung des Bauteils und/oder der Vorwärmanordnung führen. Dieses Problem stellt sich analog bei dem Unterwerkzeug. Daher wurde im Bereich des Reibschweißens von der Firma BRANSON eine Kunststoffschweißvorrichtung entwickelt, deren Unterwerkzeug auf dem Hubtisch beliebig im Raum verfahrbar ist, insbesondere entlang einer Steuerlinie. Eine Bewegung des Oberwerkzeugs ist aufgrund der beim Vibrationsschweißen bzw. Reibschweißen auftretenden Kräfte nicht möglich.

Allerdings weist diese Kunststoff-Reibschweißvorrichtung keine Vorwärmanordnung auf. Die Anordnung einer herkömmlichen Vorwärmanordnung am Hubtisch würde allerdings weiterhin nur zu einer vertikalen Bewegung der Vorwärmanordnung führen. Dies bedeutet auch, dass es bei Bauteilen mit komplexen Vorsprüngen bzw. Hinterschnitten weiterhin zur Beschädigung oder Zerstörung der Vorsprünge bzw. Hinterschnitte des Bauteils und/oder der Vorwärmanordnung kommt. Zudem ist eine herkömmliche Vorwärmanordnung dort nicht einfach integrierbar, da es insbesondere beim Verschweißen mit vorherigem Vorwärmen auf eine schnelle Verfahrbarkeit der Vorwärmanordnung und des Hubtischs ankommt. Sollte diese schnelle Verfahrbarkeit nicht gegeben sein, dann ist der Kunststoff beim Verschweißen wieder erhärtet. Dies würde jedoch nicht zu der gewünschten kosmetischen Schweißnaht sowie der reduzierten Fusselbildung führen.

Die Aufgabe der vorliegenden Erfindung ist daher, eine Kunststoff-Vorwärmanordnung bereitzustellen, mit der auch Bauteile mit komplexen Hinterschnitten vorwärmbar sind. Weiterhin soll eine entsprechende Kunststoffschweißvorrichtung sowie ein Vorwärmverfahren bereitgestellt werden.

Die obige Aufgabe wird gelöst durch eine Kunststoff-Vorwärmanordnung für eine Kunststoffschweißvorrichtung gemäß dem unabhängigen Patentanspruch 1, eine Kunststoffschweißvorrichtung gemäß dem unabhängigen Patentanspruch 10, ein Vorwärmverfahren für mindestens ein Bauteil in einer Kunststoffschweißvorrichtung gemäß dem unabhängigen Patentanspruch 13 sowie eine Infrarot-Kunststoffschweißvorrichtung gemäß dem unabhängigen Patentanspruch 16. Weitere vorteilhafte Ausgestaltungen ergeben sich aus der nachfolgenden Beschreibung, den Zeichnungen sowie den abhängigen Patentansprüchen.

Eine erfindungsgemäße Kunststoff-Vorwärmanordnung für eine Kunststoffschweißvorrichtung, umfasst: einen Träger, mindestens eine erste Vorwärmvorrichtung und eine Schwenk-Anordnung mit der die mindestens eine erste Vorwärmvorrichtung relativ zu einer ersten Oberfläche des Trägers von einer Ausgangsposition in eine Vorwärmposition schwenkbar ist, so dass ein Hinterschnitt eines ersten Bauteils umfahrbar ist und das erste Bauteil mittels der ersten Vorwärmvorrichtung erwärmbar ist.

Die erfindungsgemäße Kunststoff-Vorwärmanordnung wird nachfolgend zum besseren Verständnis im Betrieb in einer Kunststoffschweißvorrichtung beschrieben. Die Kunststoffschweißvorrichtung umfasst hierbei eine erstes und ein zweites Werkzeug. Vorzugsweise ist das erste Werkzeug an einem ersten Träger angeordnet und das zweite Werkzeug an einem zweiten Träger. Das erste und das zweite Werkzeug sind relativ zueinander bewegbar. Für den beispielhaften Betrieb stellt das erste Werkzeug ein Oberwerkzeug dar und das zweite Werkzeug ein Unterwerkzeug. Vorzugsweise und in diesem Beispiel ist die mindestens eine erste Vorwärmvorrichtung eine Infrarot-Vorwärmvorrichtung.

Zur Vereinfachung wird davon ausgegangen, dass ein erstes Bauteil bereits im ersten Werkzeug angeordnet ist und ein zweites Bauteil bereits im zweiten Werkzeug angeordnet ist. Weiterhin weist beispielhaft das erste Bauteil einen komplexen Hinterschnitt auf. Im Rahmen der vorliegenden Erfindung handelt es sich bei einem Hinterschnitt um ein Element des ersten Bauteils, welches vom ersten Bauteil derart hervorsteht, dass es abhängig von der Orientierung des ersten Bauteils im Raum einen Bereich des ersten Bauteils verdeckt. Zur Verdeutlichung des Begriffs Hinterschnitt wird nun von einem U-förmigen Bauteil oder Bereich eines Bauteils ausgegangen. Wird dieser U-förmige Bereich von oben oder unten betrachtet, enthält er keinen Hinterschnitt, da alle Bereiche frei zugänglich sind. Wird der U-förmige Bereich jedoch von der Seite betrachtet, dann verdeckt ein Schenkel, nämlich der vordere Schenkel, jeweils den anderen Schenkel, nämlich den hinteren Schenkel. Somit verdeckt abhängig von der Orientierung des Bauteils im Raum ein Schenkel den anderen Schenkel. Der jeweils vordere Schenkel stellt somit einen Hinterschnitt im Sinne der vorliegenden Erfindung dar.

Aus der obigen Erläuterung folgt auch, dass ein Bewegen der Vorwärmvorrichtung zu einer durch den Hinterschnitt abgedeckten Oberfläche, beispielsweise eine zu erwärmende Oberfläche, mit Hilfe einer geradlinigen Bewegung nicht möglich ist. Wieder auf das beispielhafte U-förmige Bauteil bzw. Bereich eines Bauteils Bezug nehmend bewegt sich die erste Vorwärmvorrichtung von links auf das Bauteil zu. Der vordere, linke Schenkel stellt somit den zu umfahrenden Hinterschnitt dar. Der hintere, rechte Schenkel stellt den zu erwärmenden Bereich dar. Die erste Vorwärmvorrichtung kann durch eine Bewegung alleine in Richtung des hinteren Schenkels, also des zu erwärmenden Bereichs, nicht zum hinteren Schenkel gelangen, da sie in diesem Fall mit dem vorderen Schenkel zusammenstoßen würde. Zur Verdeutlichung wird bei dem Hinterschnitt daher von einem imaginären Punkt oder einer Kurve ausgegangen, der bzw. die den Hinterschnitt repräsentiert und umfahren werden muss. Erst nach diesem Umfahren ist die erste Vorwärmvorrichtung benachbart zu der zu erwärmenden Oberfläche des ersten Bauteils anordenbar. Analog zu den obigen Ausführungen wird dies später und unter Bezugnahme auf die Zeichnungen anhand eines C-förmigen Bereichs eines Bauteils ebenso verdeutlicht.

Zudem befinden sich das erste und das zweite Werkzeug in einem Abstand voneinander, der ein Anordnen der Vorwärmanordnung dazwischen gestattet. Diese Position wird als Aufnahmeposition bezeichnet. Bei dieser Aufnahmeposition kann es sich auch um eine Anfangsposition handeln, also die Position, die das erste und das zweite Werkzeug im Ruhezustand der Kunststoffschweißvorrichtung aufweisen. Weiterhin wird davon ausgegangen, dass die erste Vorwärmvorrichtung der Vorwärmanordnung bereits mit dem ersten Werkzeug ausgerichtet ist.

Ausgehend von den obigen Punkten erfolgt zunächst ein Verfahren der mit dem ersten Werkzeug ausgerichteten ersten Vorwärmvorrichtung der Vorwärmanordnung in Richtung des ersten Werkzeugs. Während dieses Verfahrens, also gleichzeitig mit dem Verfahren, erfolgt automatisch ein erstes Schwenken der ersten Vorwärmvorrichtung von einer Ausgangsposition in eine Vorwärmposition relativ zur ersten Oberfläche des Trägers aufgrund der Schwenk-Anordnung. Bei der Ausgangsposition handelt es sich beispielsweise um eine Position, in der die erste Vorwärmvorrichtung winklig zur ersten Oberfläche des Trägers der Vorwärmanordnung ausgerichtet ist.

Vorzugsweise umfasst die Schwenkanordnung eine Schwenk-Struktur, an der die mindestens eine erste Vorwärmvorrichtung angeordnet ist. Zusätzlich weist die Schwenk-Struktur einen Schwenk-Mechanismus auf. Die Schwenk-Struktur ist an mindestens einer ersten Stelle schwenkbar am Träger angelenkt. An einer zweiten Stelle ist die Schwenk-Struktur mit dem Schwenk-Mechanismus in Eingriff steht. Besonders bevorzugt liegt die zweite Stelle an einer Seite der Schwenk-Struktur, die verschieden ist von der Seite, an der die Schwenk-Struktur am Träger angelenkt ist. Insbesondere liegen die erste und die zweite Stelle an gegenüberliegenden Seiten der Schwenk-Struktur. Auf diese Weise ist die mindestens eine erste Vorwärmvorrichtung von der Ausgangsposition in die Vorwärmposition mittels Betätigung des Schwenk-Mechanismus schwenkbar.

Die Schwenk-Struktur stellt dabei einen Träger für die Vorwärmvorrichtung bereit, der beispielsweise für verschieden ausgestaltete Vorwärmvorrichtungen ausgebildet ist. Daher sind verschieden ausgestaltete Vorwärmvorrichtungen auf dem Träger bzw. der Schwenk-Struktur anordenbar, ohne dass ein Austausch der Schwenk-Struktur selbst vorgenommen werden muss.

Die erste Vorwärmvorrichtung umfährt somit durch das Schwenken den mindestens einen Hinterschnitt im ersten Bauteil. Auf diese Weise ist am Ende des Verfahrens bzw. der Bewegung die erste Vorwärmvorrichtung in der Vorwärmposition benachbart dem ersten Werkzeug angeordnet. In der Vorwärmposition befindet sich die erste Vorwärmvorrichtung beispielsweise in einer Ausrichtung parallel zur ersten Oberfläche des Trägers der Vorwärmanordnung.

Im Anschluss wird zumindest ein Teilbereich der Oberfläche des ersten Bauteils mittels der ersten Vorwärmvorrichtung erwärmt. Dieser Teilbereich wird auch als Füge- oder Schweißbereich bezeichnet. Danach erfolgt ein Verfahren der ersten Vorwärmvorrichtung der Vorwärmanordnung weg vom ersten Werkzeug. Gleichzeitig mit dem Verfahren erfolgt automatisch ein zweites Schwenken der ersten Vorwärmvorrichtung von der Vorwärmposition zurück in die Ausgangsposition, so dass die erste Vorwärmvorrichtung den mindestens einen Hinterschnitt im ersten Bauteil erneut umfährt. Die Schwenk-Anordnung bewirkt also nun das umgekehrte Schwenken der ersten Vorwärmvorrichtung im Vergleich zum obigen ersten Schwenken. Am Ende dieses Schritts befinden sich das erste und das zweite Werkzeug wieder in der Aufnahmeposition.

Sobald das erste und das zweite Werkzeug die Aufnahmeposition erreicht haben wird die Vorwärmanordnung aus der Ausrichtung mit dem ersten Werkzeug gefahren. Danach erfolgt ein Verschweißen des ersten und des zweiten Bauteils miteinander auf bekannte Weise.

Aufgrund des Hinterschnitts hier beispielhaft im ersten Bauteil im ersten Werkzeug, also im Oberwerkzeug, muss das zweite Werkzeug derart im Raum beweglich angeordnet sein, dass das zweite Werkzeug mit dem zweiten Bauteil den Hinterschnitt im ersten Bauteil umfahren kann. Dies gilt insbesondere für Reibschweißvorrichtungen, da hier ein Verfahren des ersten Werkzeugs, also des Oberwerkzeugs, aufgrund der beim Reibschweißen auftretenden Kräfte nicht realisierbar ist. Bei einer Infrarot-Schweißvorrichtung ist jedoch auch das Oberwerkzeug im Raum bewegbar anordenbar, da hier keine Reibschweißkräfte auf das erste Werkzeug als Oberwerkzeug wirken, also insbesondere keine Vibrationen während des Reibschweißverfahrens. Die erfindungsgemäße Kunststoff-Vorwärmanordnung ist also sowohl beim Reibschweißen als auch beim reinen Infrarotschweißen einsetzbar.

Ein Vorteil der erfindungsgemäßen Kunststoff-Vorwärmanordnung ist somit, dass ein Bauteil mit einem komplexen Hinterschnitt auf einfache und kostengünstige Weise erwärmbar ist. Dies hat in der weiteren Verarbeitung bzw. Herstellung der Schweißverbindung die gewünschten kosmetischen Schweißnaht sowie der reduzierten Fusselbildung zur Folge.

In einer bevorzugten Ausführungsform öffnet bzw. schließt der durch die Schwenkbewegung zwischen der ersten Vorwärmvorrichtung und dem Träger resultierende Drehwinkel derart, dass der imaginäre Punkt bzw. Hinterschnitt zumindest mit einem Teilbereich der ersten Vorwärmvorrichtung umfahrbar ist und die erste Vorwärmvorrichtung benachbart einem hinter dem ersten liegenden zweiten imaginären Punkt als Zielpunkt anordenbar ist. Bei dem Zielpunkt handelt es sich beispielsweise um die zu erwärmende Oberfläche. Auf die Bedeutung des imaginären Punkts bzw. Hinterschnitts wurde bereits oben ausführlich eingegangen, so dass an dieser Stelle darauf verwiesen wird.

In einer anderen bevorzugten Ausführungsform ist die Schwenk-Anordnung pneumatisch, elektrisch oder mechanisch betätigbar. Hierbei ist insbesondere die mechanische Betätigung bevorzugt, da mit ihr im Vergleich zur pneumatischen oder elektrischen Betätigung ein weiterer Zeitvorteil zusammenhängt. Dies ist darin begründet, dass bei der rein mechanischen Betätigung kein Zeitverlust aufgrund von Steuersignalen auftritt und keine aufwendige Positionsüberwachung erforderlich ist. Dies wird insbesondere in der späteren detaillierten Beschreibung unter Bezugnahme auf die Figuren deutlich.

In einer weiteren bevorzugten Ausführungsform weist die Kunststoff-Vorwärmanordnung weiterhin mindestens eine zweite Vorwärmvorrichtung auf, die auf einer zweiten der ersten Oberfläche entgegengesetzten Oberfläche des Trägers angeordnet ist. Die zweite Vorwärmvorrichtung dient zum Erwärmen bzw. Vorwärmen des zweiten Bauteils im zweiten Werkzeug. In Abhängigkeit vom zweiten Bauteil im zweiten Werkzeug ist die zweite Vorwärmvorrichtung starr oder analog zur ersten Vorwärmvorrichtung bewegbar am Träger angeordnet. Mittels dieser Ausgestaltung ist die Kunststoff-Vorwärmvorrichtung auch in einer reinen Infrarot-Kunststoffschweißvorrichtung einsetzbar.

Vorteilhafterweise weist die Kunststoff-Vorwärmanordnung mindestens zwei erste Vorwärmvorrichtungen auf. Mittels dieser Ausgestaltung sind beispielsweise mehrere Bauteile in einem Arbeitsgang erwärmbar, was weiter Zeit spart. Im Hinblick auf die Leuchtenanwendung in der Automobilindustrie sind so eine rechte und eine linke Leuchte gleichzeitig herstellbar. Es ist daher weiterhin vorteilhaft, wenn die Kunststoff-Vorwärmanordnung ebenso mindestens zwei zweite Vorwärmvorrichtungen aufweist.

In einer weiteren bevorzugten Ausführungsform weist die Kunststoff-Vorwärmanordnung einen Hebelmechanismus zum Schwenken der ersten Vorwärmvorrichtung auf, wobei der Hebelmechanismus ein Betätigungselement umfasst. Der Hebelmechanismus dient hierbei als Schwenkmechanismus und stellt eine technisch besonders vorteilhafte Ausgestaltung dar, wenn er ein mechanisches Betätigungselement umfasst.

Die sich ergebende Arbeitsweise der Kunststoff-Vorwärmvorrichtung im Betrieb ist dann wie folgt. Durch das Verfahren der Kunststoff-Vorwärmanordnung in Richtung des ersten Werkzeugs stößt im Betrieb der Kunststoffschweißvorrichtung das Betätigungselement an eine obere Befestigungsplatte oder ein Bestandteil davon. An dieser oberen Befestigungsplatte ist das erste Werkzeug angeordnet. Wird die Kunststoff-Vorwärmanordnung nun weiter verfahren, dann wird das Betätigungselement nach unten gedrückt und hebt über den Hebelmechanismus die erste Vorwärmvorrichtung an. Auf diese Weise wird die erste Vorwärmvorrichtung von der Ausgangsposition in die Vorwärmposition verfahren und umfährt dabei gleichzeitig den Hinterschnitt im ersten Bauteil. Bei Wegfahren der Kunststoff-Vorwärmanordnung vom ersten Werkzeug laufen die obigen Schritte in umgekehrter Reihenfolge ab. Bei der oben beschriebenen mechanischen Betätigung tritt ein Zeitverlust aufgrund einer Positionsabfrage nicht auf und das Ansteuern mittels Steuersignalen ist nicht erforderlich. Somit ist die mechanische Betätigung automatisch während des Verfahrens der Kunststoff-Vorwärmvorrichtung besonders vorteilhaft.

Die erfindungsgemäße Kunststoffschweißvorrichtung umfasst ein erstes Werkzeug, ein zweites Werkzeug, wobei das erste und das zweite Werkzeug relativ zueinander bewegbar sind, so dass dazwischen angeordnete Bauteile mittels des ersten und des zweiten Werkzeugs verschweißbar sind, sowie eine erfindungsgemäße Kunststoff-Vorwärmanordnung.

Die erfindungsgemäße Kunststoffschweißvorrichtung wurde oben bei der Beschreibung der Kunststoff-Vorwärmanordnung bereits ausführlich diskutiert, so dass an dieser Stelle darauf verwiesen wird. Die entsprechenden Vorteile der erfindungsgemäßen Kunststoffschweißvorrichtung ergeben sich ebenfalls aus der obigen Beschreibung der Kunststoff-Vorwärmanordnung.

In einer bevorzugten Ausführungsform ist die Kunststoffschweißvorrichtung eine Kunststoff-Reibschweißvorrichtung oder eine Infrarot-Schweißvorrichtung. Im Fall einer reinen Infrarot-Schweißvorrichtung muss die Kunststoff-Vorwärmanordnung dann neben der ersten Vorwärmvorrichtung auch eine zweite Vorwärmvorrichtung aufweisen, damit beide Bauteile entsprechend vorgewärmt werden und sich die gewünschte Schweißverbindung ergibt. Wie bereits weiter oben diskutiert ist im Fall der Reibschweißvorrichtung das Oberwerkzeug statt an der oberen Befestigungsplatte angeordnet aufgrund der beim Reibschweißen auftretenden Kräfte. Daher muss bei der Reibschweißvorrichtung das Unterwerkzeug ebenfalls im Raum bewegbar sein, damit der Hinterschnitt umfahrbar ist. Bei der Infrarot-Kunststoffschweißvorrichtung kann das Ober- und/oder das Unterwerkzeug im Raum bewegbar angeordnet sein.

In einer weiteren bevorzugten Ausführungsform ist die Vorwärmanordnung zwischen einer Ruheposition und einer Vorwärmposition bewegbar. In der Vorwärmposition ist ein Bauteil im dazugehörigen Werkzeug mittels der Vorwärmvorrichtung erwärmbar. Grundsätzlich bestehen im Hinblick auf die Bewegbarkeit der Kunststoff-Vorwärmanordnung zwei Möglichkeiten. Im ersten Fall ist die Vorwärmanordnung eigenständig frei im Raum bewegbar. Im zweiten Fall ist die Vorwärmanordnung an eine bereits vorhandene Komponente der Kunststoffschweißvorrichtung gekoppelt und vollzieht die entsprechende Bewegung mit. Dies wäre beispielsweise der Fall, wenn die Vorwärmanordnung an einen Hubtisch der Kunststoffschweißvorrichtung gekoppelt ist. Das Vorwärmverfahren muss in beiden Fällen die zusätzlichen Schritte aufweisen: Verfahren der Vorwärmanordnung von einer Ruheposition in eine Einsatzposition, so dass die erste Vorwärmvorrichtung auf der ersten Oberfläche des Trägers mit dem ersten Werkzeug der Kunststoffschweißvorrichtung ausgerichtet ist, und nach Beendigung des Vorwärmens Verfahren der Vorwärmanordnung von der Einsatzposition in die Ruheposition.

Eine weitere erfindungsgemäße Kunststoffschweißvorrichtung ist eine reine Infrarot-Kunststoffschweißvorrichtung, die der oben beschriebenen Kunststoffschweißvorrichtung ähnelt. Allerdings ist hier die Schwenk-Anordnung nicht an die erste Vorwärmvorrichtung gekoppelt, sondern an das erste und/oder das zweite Werkzeug. Bei dem ersten Werkzeug handelt es sich insbesondere wieder um das Oberwerkzeug. Der Aufbau und die Funktionsweise der Schwenk-Anordnung sind analog zum oben beschriebenen Aufbau der Schwenk-Anordnung für die erste Vorwärmvorrichtung.

Zur Verdeutlichung wird nachfolgend davon ausgegangen, dass die Schwenk-Anordnung an das erste Werkzeug, also das Oberwerkzeug, gekoppelt ist. Bei Näherkommen der Vorwärmanordnung wird dann das erste Werkzeug von einer Ausgangsposition in eine Vorwärmposition geschwenkt. Auf diese Weise stellt der Hinterschnitt im ersten Bauteil ebenfalls kein Problem für die Vorwärmanordnung dar. Beim Wegfahren der Vorwärmanordnung kehrt das erste Werkzeug dann in die Ausgangsposition zurück. Nähert sich nun das zweite Werkzeug beispielsweise auf einem Hubtisch, dann erfolgt erneut ein Schwenken des ersten Werkzeugs aufgrund der Schwenk-Anordnung. Somit ist auch hier der Hinterschnitt umfahren worden und ein ordnungsgemäßes Verschweißen des ersten mit dem zweiten Bauteil ist realisierbar.

Das erfindungsgemäße Vorwärmverfahren für mindestens ein Bauteil in einer Kunststoffschweißvorrichtung mit Vorwärmanordnung, insbesondere einer erfindungsgemäßen Kunststoffschweißvorrichtung, umfasst die Schritte: Verfahren einer mit einem ersten Werkzeug ausgerichteten ersten Vorwärmvorrichtung der Vorwärmanordnung in Richtung des ersten Werkzeugs, wobei gleichzeitig automatisch ein erstes Schwenken der ersten Vorwärmvorrichtung von einer Ausgangsposition in eine Vorwärmposition relativ zur ersten Oberfläche des Trägers aufgrund einer Schwenk-Anordnung stattfindet, so dass die erste Vorwärmvorrichtung mindestens einen Hinterschnitt im ersten Bauteil umfährt und die erste Vorwärmvorrichtung in der Vorwärmposition benachbart dem ersten Werkzeug angeordnet ist, danach Erwärmen zumindest eines Teilbereichs der Oberfläche des ersten Bauteils mittels der ersten Vorwärmvorrichtung, anschließend Verfahren der ersten Vorwärmvorrichtung der Vorwärmanordnung weg vom ersten Werkzeug, wobei gleichzeitig automatisch ein zweites Schwenken der ersten Vorwärmvorrichtung von der Vorwärmposition zurück in die Ausgangsposition stattfindet, so dass die erste Vorwärmvorrichtung den mindestens einen Hinterschnitt im ersten Bauteil umfährt.

Das erfindungsgemäße Vorwärmverfahren wurde bereits oben in Zusammenhang mit der erfindungsgemäßen Kunststoff-Vorwärmanordnung beschrieben. Daher wird an dieser Stelle auf die entsprechenden Ausführungen sowie die sich daraus ergebenden Vorteile verwiesen.

In einer alternativen Ausführungsform, und Bezug nehmend auf die erfindungsgemäße reine Infrarot-Kunststoffschweißvorrichtung mit der an mindestens eines der Werkzeuge gekoppelten Schwenk-Anordnung ist das Vorwärmverfahren natürlich auch dort analog einsetzbar. In diesem Fall erfolgt dann ein Schwenken des jeweiligen Werkzeugs während einer Annäherung oder eines Entfernens der Vorwärmanordnung. Das gleiche gilt dann natürlich bei der Annäherung oder Entfernung des verbleibenden Werkzeugs zum Verschweißen der Bauteile miteinander.

In einer bevorzugten Ausführungsform umfasst das Vorwärmverfahren die weiteren Schritte: Verfahren der Vorwärmanordnung, insbesondere der erfindungsgemäßen Vorwärmanordnung, vor oder während des Verfahrens in Richtung des ersten Werkzeugs von einer Ruheposition in eine Einsatzposition, so dass die erste Vorwärmvorrichtung auf der ersten Oberfläche des Trägers mit dem ersten Werkzeug der Kunststoffschweißvorrichtung ausgerichtet ist, und Verfahren der Vorwärmanordnung von der Einsatzposition in die Ruheposition nach dem Erwärmen des Bauteils. Auch hierzu wurden die Vorteile bereits oben im Zusammenhang mit der erfindungsgemäßen Kunststoffschweißvorrichtung bereits erläutert. In einer ebenso bevorzugten Ausführungsform findet das automatische Schwenken mittels eines Betätigungselements eines Schwenk-Mechanismus der Schwenk-Anordnung statt, wobei das Betätigungselement ein pneumatisches, ein elektrisches oder vorzugsweise ein mechanisches Betätigungselement ist. Im Hinblick auf diese Ausführungsform des Verfahrens wird ebenfalls auf die erfindungsgemäße Kunststoff-Vorwärmanordnung und den dort beschriebenen Verfahrensablauf verwiesen.

Nachfolgend wird die vorliegende Erfindung detailliert unter Bezugnahme auf die Zeichnungen beschrieben. Gleiche Bezugszeichen in den Zeichnungen bezeichnen gleiche Bauteile. Es zeigen:
- Fig. 1: eine schematische Seitenansicht einer Ausführungsform einer Kunststoff-Vorwärmanordnung in einer Ausgangsposition
- Fig. 2: eine schematische Frontansicht der Ausführungsform einer Kunststoff-Vorwärmanordnung aus Fig. 1 in einer Ausgangsposition
- Fig. 3: eine schematische Seitenansicht der Ausführungsform einer Kunststoff-Vorwärmanordnung aus Fig. 1 in einer Vorwärmposition
- Fig. 4: eine schematische Frontansicht der Ausführungsform einer Kunststoff-Vorwärmanordnung aus Fig. 1 in einer Vorwärmposition
- Fig. 5: eine perspektivische Ansicht einer Ausführungsform einer Kunststoff-Vorwärmanordnung in einer Vorwärmposition
- Fig. 6: eine Frontansicht der Ausführungsform gemäß Fig. 5
- Fig. 7: eine perspektivische Ansicht einer weiteren Ausführungsform der Kunststoff-Vorwärmanordnung
- Fig. 8: eine perspektivische Ansicht einer Ausführungsform einer Schwenk-Anordnung der Kunststoff-Vorwärmanordnung
- Fig. 9: eine perspektivische Ansicht einer Ausführungsform einer Kunststoffschweißvorrichtung,
- Fig. 10: eine Frontansicht der Ausführungsform der Kunststoffschweißvorrichtung aus Fig. 9 und
- Fig. 11: eine schematischen Verfahrensablauf einer Ausführungsform eines Vorwärmverfahrens.

Nachfolgend wird eine Ausführungsform der erfindungsgemäßen Kunststoff-Vorwärmanordnung beim Einsatz in einer Kunststoffschweißvorrichtung beschrieben. Die Kunststoffschweißvorrichtung wird beispielsweise in der Automobilindustrie zur Leuchtenherstellung, in der Medizintechnik oder in der Konsumgüterindustrie zur Herstellung von Bauteilen oder Bauteilgruppen aus Kunststoff verwendet.

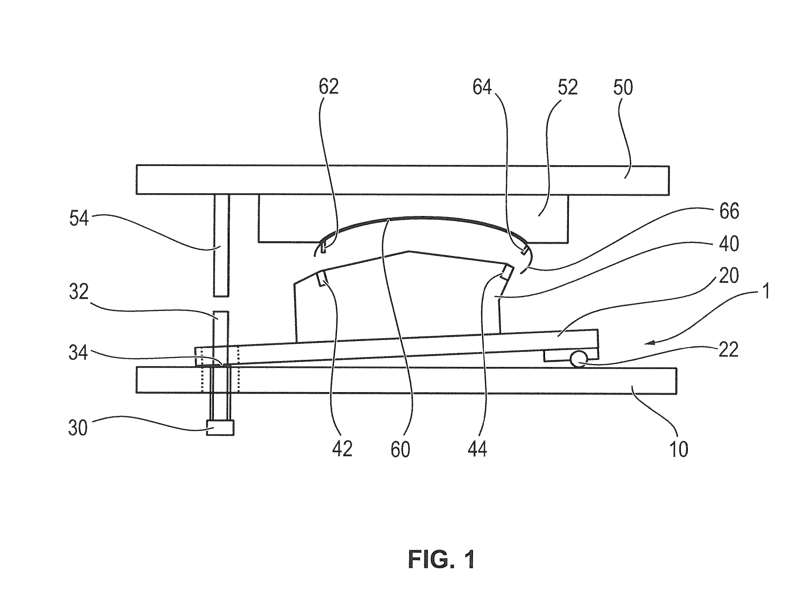

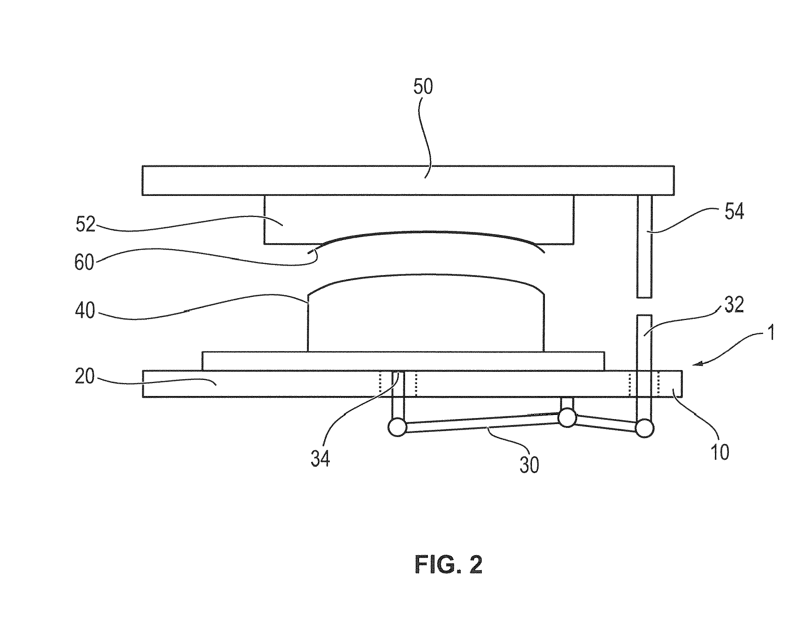

Fig. 1 zeigt eine stark vereinfachte schematische Seitenansicht einer Kunststoff-Vorwärmanordnung 1 und Fig. 2 die dazugehörige Frontansicht. Die Kunststoff-Vorwärmanordnung 1 umfasst einen Träger 10 auf dem eine Schwenk-Struktur 20 angeordnet ist. Die Schwenk-Struktur 20 ist an einer ersten Stelle 22 am Träger 10 angelenkt, vorzugsweise an zwei ersten Stellen 22. Die erste Stelle 22 stellt somit einen Drehpunkt oder vorzugsweise eine Drehachse für die Schwenkstruktur 20 bereit. Auf der Schwenk-Struktur 20 ist eine erste Vorwärmvorrichtung 40 angeordnet, vorzugsweise eine Infrarot-Vorwärmvorrichtung. Die erste Vorwärmvorrichtung 40 weist zwei Strahlungsquellen auf, eine erste Strahlungsquelle 42 und eine zweite Strahlungsquelle 44. Bei der ersten 42 und der zweiten Strahlungsquelle 44 kann es sich sowohl um eine gemeinsame Strahlungsquelle wie beispielsweise einen Heizkreis handeln, wie auch um zwei eigenständige Strahlungsquellen.

In den Fig. 1 und 2 befinden sich die Schwenk-Struktur 20 und damit auch die erste Vorwärmvorrichtung 40 auf der Schwenk-Struktur 20 in einer Ausgangsposition. Wie leicht zu erkennen ist, sind die Schwenk-Struktur 20 und damit auch die erste Vorwärmvorrichtung 40 in dieser Ausgangsposition schräg bzw. winklig zur Oberfläche des Trägers 10 angeordnet.

Zur weiteren Verdeutlichung ist in den Fig. 1 und 2 eine obere Befestigungsplatte 50 einer Kunststoffschweißvorrichtung 3 dargestellt. An der oberen Befestigungsplatte 50 sind ein erstes Werkzeug 52 sowie ein Auslöseelement 54 angeordnet. Die Funktionsweise des Auslöseelements 54 wird später detailliert beschrieben. Im ersten Werkzeug 52 befindet sich ein erstes Bauteil 60, das einen ersten Vorsprung 62, einen zweiten Vorsprung 64 sowie einen dritten Vorsprung 66 aufweist, der einen Hinterschnitt definiert. In den schematischen Darstellungen der Fig. 1 bis 4 stellen der erste 62 und der zweite Vorsprung 64 beispielhaft den Fügebereich bzw. die Fügezone dar.

Wie bereits eingangs erläutert, handelt es sich bei einem Hinterschnitt um ein Element des ersten Bauteils 60, welches vom ersten Bauteil 60 derart hervorsteht, dass es abhängig von der Orientierung des ersten Bauteils 60 im Raum einen Bereich des ersten Bauteils verdeckt. Im vorliegenden Beispiel ist dies insbesondere ein Abschnitt des Fügebereichs. Damit verhindert der Hinterschnitt eine Bewegung der ersten Vorwärmvorrichtung 40 ausschließlich entlang einer Achse hin zu einer zu erwärmenden Oberfläche des Bauteils 60. Bezogen auf die Fig. 1 bis 4 bildet der dritte Vorsprung 66 mit dem angrenzenden Bereich des ersten Bauteils 60 einen Hinterschnitt mit konvexer Form. Insbesondere ist dieser Bereich C-förmig. Der vom dritten Vorsprung 66 verdeckte Bereich ist hier der Bereich des ersten Bauteils, der rechts von einer gedachten vertikalen Linie vom dritten Vorsprung 66 in Richtung des ersten Bauteils 60 liegt. Dieser verdeckte Bereich des ersten Bauteils 60 ist mittels einer im vorliegenden Beispiel vertikalen Bewegung der ersten Vorwärmvorrichtung 40 alleine nicht erreichbar. Hierauf wird später bei der Funktionsweise detailliert eingegangen.

Weiterhin umfasst die Schwenk-Anordnung 1 einen Schwenk-Mechanismus 30 mit einem Betätigungselement 32. Beim Schwenk-Mechanismus 30 handelt es sich insbesondere um einen Hebelmechanismus. Der Schwenk-Mechanismus 30 greift an einer zweiten Stelle 34 an der Schwenk-Struktur 20 an. Bei Betätigung des Betätigungselements 32 beispielsweise durch das Auslöseelement 54 wird die erste Vorwärmvorrichtung 40 von der Ausgangsposition in eine Vorwärmposition geschwenkt.

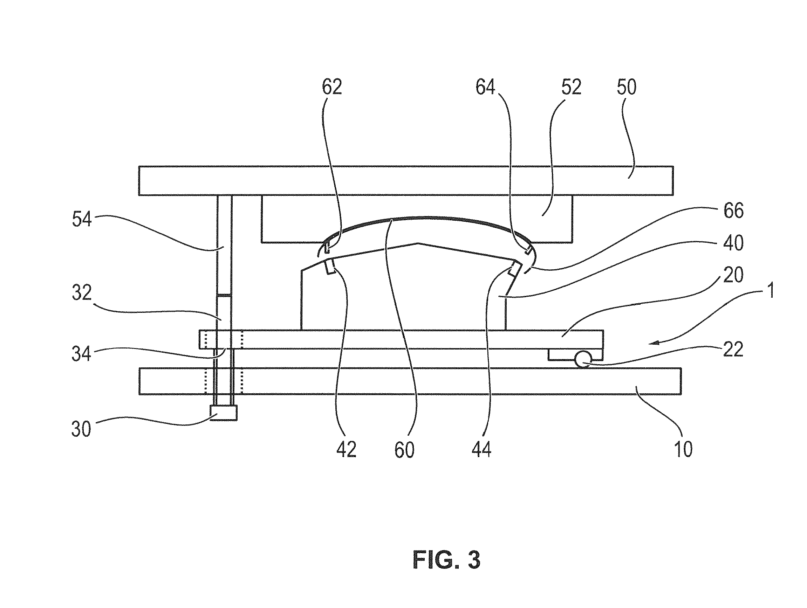

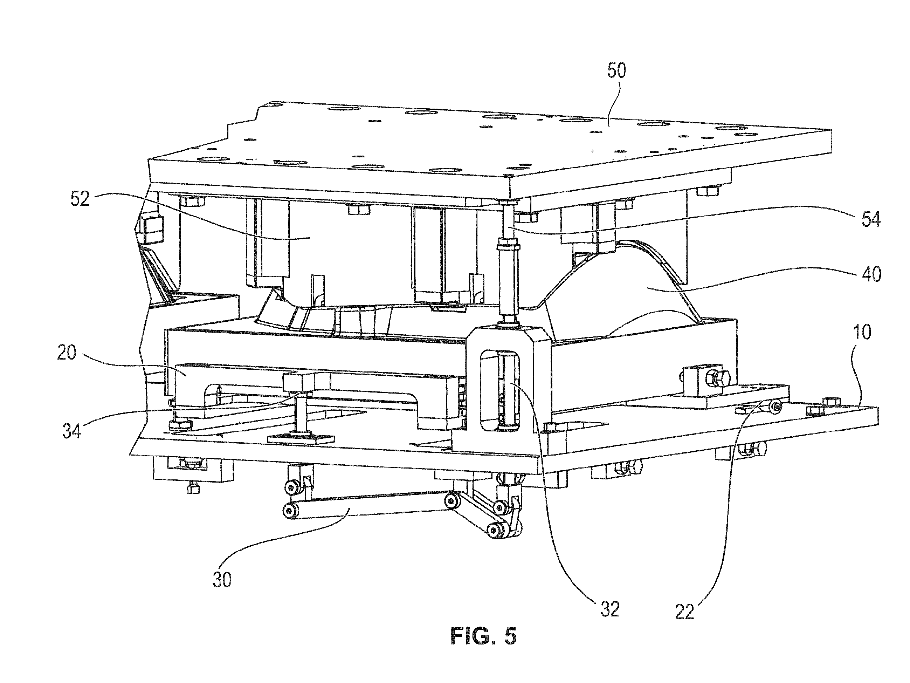

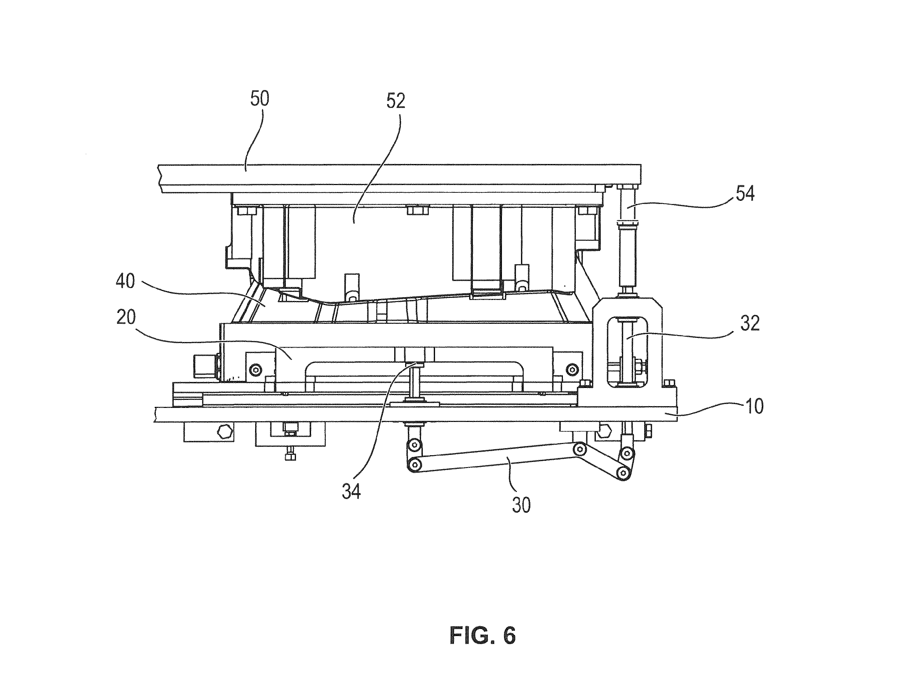

Somit ist mittels der erfindungsgemäßen Kunststoff-Vorwärmanordnung 1 der dritte Vorsprung 66 des ersten Bauteils 60 umfahrbar, so dass die erste Vorwärmvorrichtung 40 benachbart dem ersten Bauteil 60 anordenbar ist. Zur Verdeutlichung wird nachfolgend auf die stark vereinfachten schematischen Fig. 3 und 4 sowie die Fig. 5 und 6 Bezug genommen.

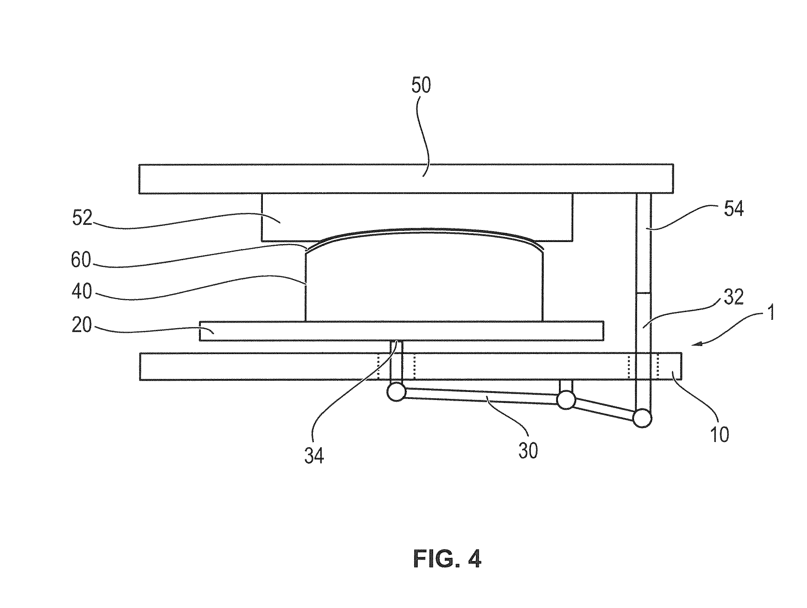

In den Fig. 3 und 4 sowie 5 und 6 befindet sich die Schwenk-Struktur 20 und damit auch die erste Vorwärmvorrichtung 40 in der Vorwärmposition. Die erste Strahlungsquelle 42 ist benachbart dem ersten Vorsprung 62 angeordnet und die zweite Strahlungsquelle 44 ist benachbart dem zweiten Vorsprung 64 angeordnet. Der dritte Vorsprung 66 bzw. der Hinterschnitt wurde von der ersten Vorwärmvorrichtung 40 umfahren. Das Umfahren findet automatisch während einer Bewegung des Trägers 10 in Richtung der oberen Befestigungsplatte 50 statt. Sobald das Auslöseelement 54 mit dem Betätigungselement 32 in Eingriff gelangt, wird die Schwenk-Struktur 20 über den Schwenk-Mechanismus 30 an der zweiten Stelle 34 angehoben. Da die Schwenk-Struktur 20 am entgegensetzten Ende an der ersten Stelle schwenkbar angelenkt ist, findet ein Schwenken der Schwenk-Struktur 20 um diese Drehachse statt. Ein aus der Schwenkbewegung resultierender Drehwinkel öffnet hierbei vorzugsweise in dieselbe Richtung wie eine Oberfläche mit angrezendem Hinterschnitt im ersten Bauteil 60. Bezogen auf die Fig. 1 und 4 bildet der dritte Vorsprung 66 den Hinterschnitt und liegt, bei Betrachtung mit dem angrenzenden Bereich des ersten Bauteils 60, als konvexe Form oder C-förmig vor. Diese konvexe Form ist zur Bauteilinnenseite hin offen, also im Beispiel nach links. Der bei der Schwenkbewegung der ersten Vorwärmvorrichtung 40 resultierende Drehwinkel ist ebenfalls nach links offen. Dies ergibt sich daraus, dass die erste Stelle 22, an der die Schwenk-Struktur 20 am Träger 10 angelenkt ist, im vorliegenden Beispiel an derselben Seite wie der Hinterschnitt bzw. der dritte Vorsprung 66 angeordnet ist.

Anhand der Fig. 3 und 4 ist weiterhin erkennbar, dass bei einer reinen vertikalen Bewegung der ersten Vorwärmvorrichtung 40 entlang einer Achse hin zu oder weg vom ersten Bauteil 60 die erste Vorwärmvorrichtung 40 am dritten Vorsprung 66 hängen bleiben würde, was zu einer Beschädigung und/oder Zerstörung des ersten Bauteils und/oder der ersten Vorwärmvorrichtung 40 führen würde. Dies wird mittels der Kunststoff-Vorwärmanordnung 1 verhindert. Wie bereits oben verdeutlicht, ist die erste Vorwärmvorrichtung 40 mittels der Schwenk-Anordnung bestehend aus Schwenk-Struktur 20 und Schwenk-Mechanismus 30 während der Bewegung entlang einer Achse, hier der vertikalen Achse, um einen Drehpunkt bzw. eine Drehachse an der ersten Stelle 22 schwenkbar. Durch den resultierenden Drehwinkel zwischen Träger 10 und erster Vorwärmvorrichtung 40 ist die erste Vorwärmvorrichtung 40 dann benachbart einer zu erwärmenden Oberfläche des ersten Bauteils 60 anordenbar. Bei der zu erwärmenden Oberfläche handelt es sich hier beispielhaft um den zweiten Vorsprung 64. Bei einer reinen Bewegung der ersten Vorwärmvorrichtung 40 mit dem Träger 10 entlang einer vertikalen Achse ist der zweite Vorsprung 64 durch den dritten Vorsprung 66 verdeckt, wie oben erläutert. Aufgrund der Schwenkbewegung der ersten Vorwärmvorrichtung 40 gleichzeitig mit der Bewegung entlang der vertikalen Achse ist jedoch die Umgehung bzw. Umfahrung dieses dritten Vorsprungs 66 realisierbar.

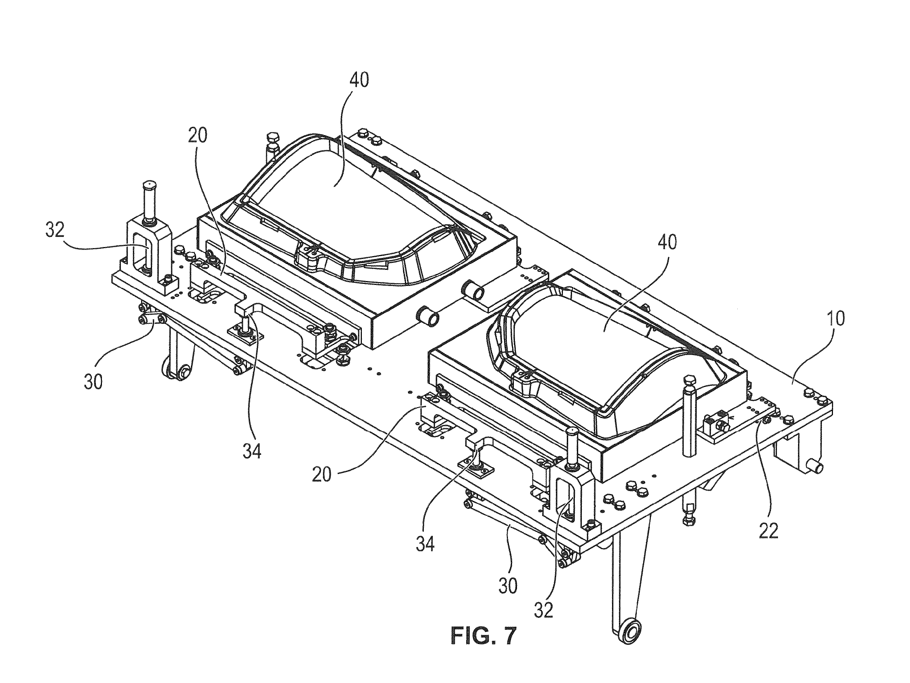

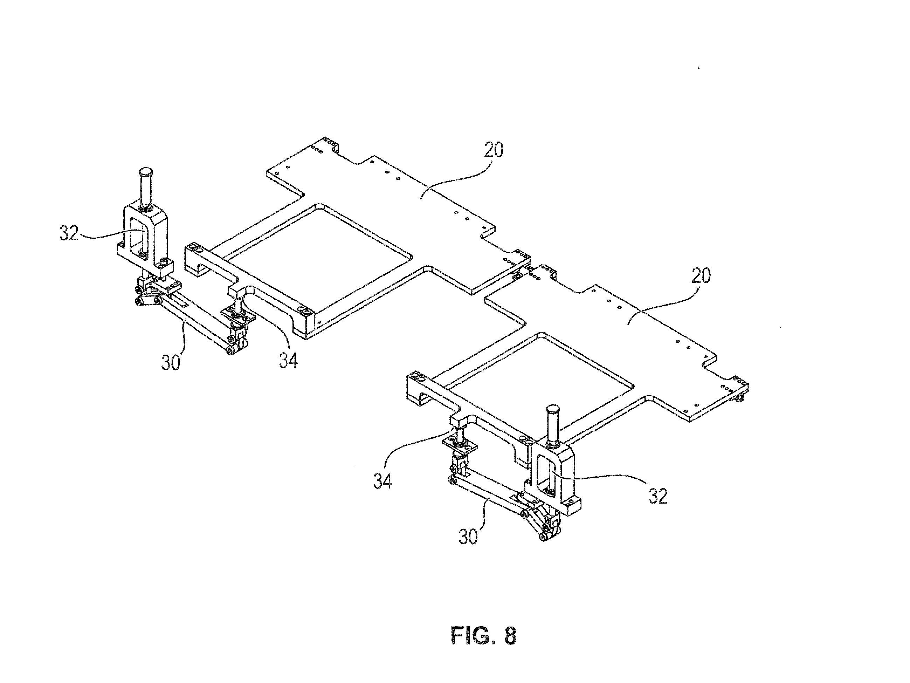

Fig. 7 zeigt eine weitere Ausführungsform der Kunststoff-Vorwärmanordnung 1. Hierbei sind zwei erste Vorwärmvorrichtungen 40 am Träger 10 angeordnet. Die Anordnung erfolgt auch hier mittels der Schwenk-Struktur 20, die detailliert in Fig. 8 dargestellt ist. Die Schwenk-Struktur 20 weist zwei erste Stellen 22 auf, mit denen sie später an einem Träger 10 angelenkt ist. Auf diese Weise wird eine Drehachse der Schwenk-Struktur 20 definiert. An der gegenüberliegenden Seite der Schwenk-Struktur 20 steht die Schwenk-Struktur 20 mit dem Schwenk-Mechanismus 30 an der zweiten Stelle 34 in Eingriff. Wie bereits eingangs erläutert bewirkt eine Kraft auf das Betätigungselement 32 in Richtung des Trägers 10 ein Anheben der Schwenk-Struktur 20 an der zweiten Stelle 34. Aufgrund der Anlenkung der Schwenk-Struktur 20 an der ersten Stelle 22 findet daher ein Schwenken der Schwenk-Struktur 20 um die erste Stelle 22 als Drehachse statt.

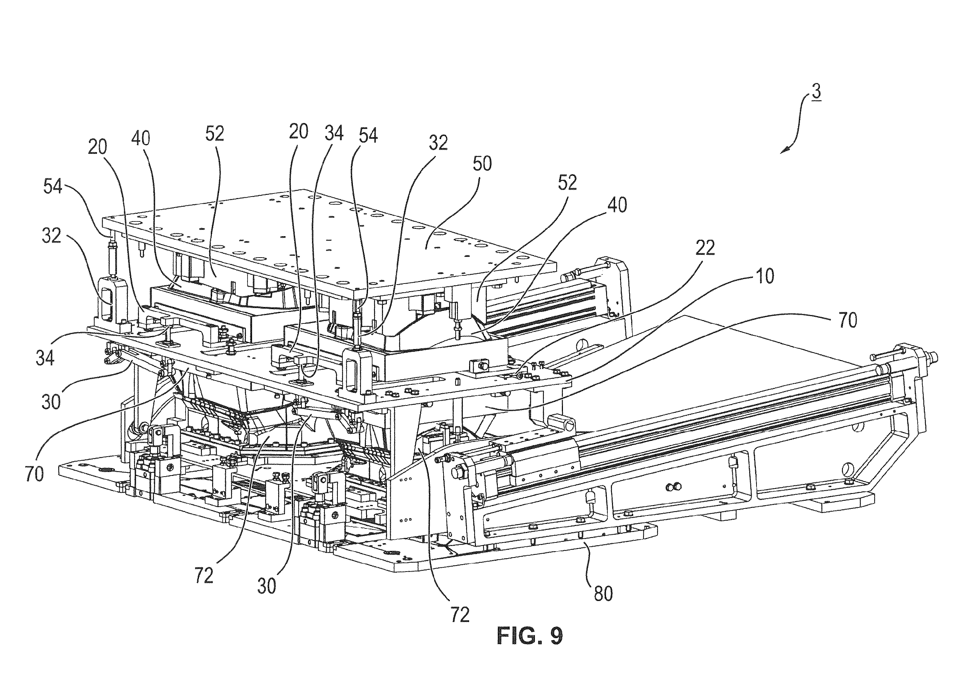

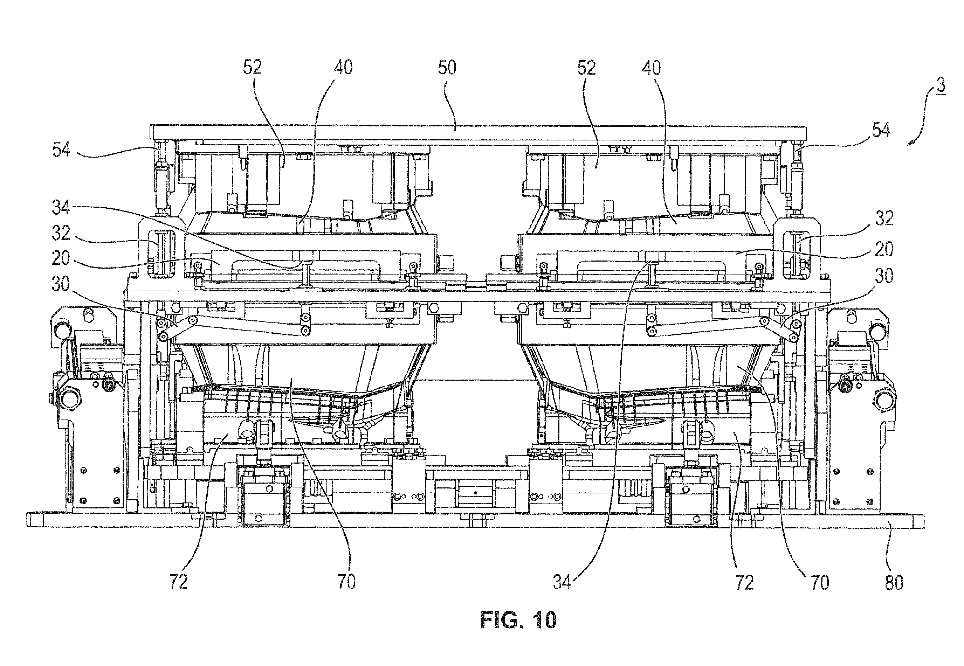

In den Fig. 9 und 10 ist eine Ausführungsform einer Kunststoffschweißvorrichtung 3 gezeigt. Die Kunststoffschweißvorrichtung 3 umfasst eine obere Befestigungsplatte 50, einen Hubtisch 80 sowie die Kunststoff-Vorwärmanordnung 1. Im dargestellten Beispiel ist die Kunststoff-Vorwärmanordnung 1 an den Hubtisch 80 gekoppelt, so dass ein vertikales Verfahren des Hubtischs 80 auch ein vertikales Verfahren der Kunststoff-Vorwärmanordnung 1 zur Folge hat. Allerdings kann die Kunststoff-Vorwärmanordnung 1 auch einen eigenen Vertikalantrieb haben, ohne dass sie an den Hubtisch 80 gekoppelt sein muss.

An der oberen Befestigungsplatte 50 sind zwei erste Werkzeuge 52 starr angeordnet. Am Hubtisch 80 sind zwei zweite Werkzeuge 72 angeordnet. Die Kunststoff-Vorwärmanordnung 1 weist neben den oben beschriebenen Komponenten zusätzlich zwei zweite Vorwärmvorrichtungen 70 auf. Die zwei zweiten Vorwärmvorrichtungen 70 sind starr am Träger 10 an einer zweiten Oberfläche angeordnet, die der ersten Oberfläche mit den ersten Vorwärmvorrichtungen 40 gegenüberliegt. Alternativ sind die zweiten Vorwärmvorrichtungen 70 auch mit einer Schwenk-Anordnung ausgestattet.

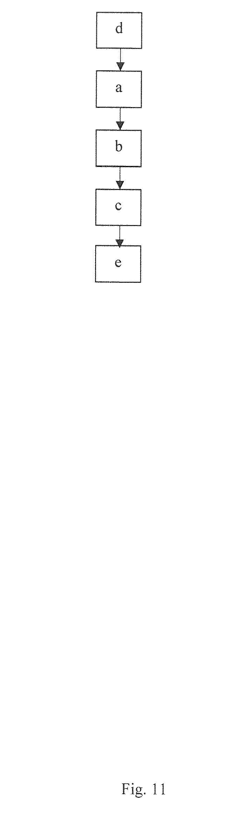

Nachfolgend wird die Funktionsweise eines Vorwärmverfahrens mit der Kunststoff-Vorwärmvorrichtung 1 anhand von Fig. 11 beschrieben. Ausgehend von der Kunststoffschweißvorrichtung 3 der Fig. 9 und 10 findet zunächst in Schritt d ein Verfahren der Vorwärmanordnung 1 von einer Ruheposition in eine Einsatzposition statt. In der Ruheposition ist die Vorwärmanordnung 1 nicht zwischen dem ersten 52 und dem zweiten Werkzeug 72 angeordnet. In der Einsatzposition hingegen ist die erste Vorwärmvorrichtung 40 auf der ersten Oberfläche des Trägers 10 mit dem ersten Werkzeug 52 der Kunststoffschweißvorrichtung 3 ausgerichtet. Gleichzeitig mit oder nach dem Verfahren in die Einsatzposition erfolgt in Schritt a ein Verfahren der ersten Vorwärmvorrichtung 40 der Vorwärmanordnung 1 in Richtung des ersten Werkzeugs 52. Ab dem Zeitpunkt, wo das Betätigungselement 32 mit dem Auslöseelement 54 in Kontakt kommt, findet gleichzeitig automatisch ein erstes Schwenken der ersten Vorwärmvorrichtung 40 von der Ausgangsposition in die Vorwärmposition relativ zur ersten Oberfläche des Trägers 10 statt. Das Betätigungselement 32 ist insbesondere ein pneumatisches, ein elektrisches oder vorzugsweise ein mechanisches Betätigungselement 32. In der Ausführungsform gemäß den Figuren handelt es sich um ein mechanisches Betätigungselement 32. Auf diese Weise umfährt die erste Vorwärmvorrichtung 40 mindestens einen Hinterschnitt im ersten Bauteil 60. Weiterhin ist die erste Vorwärmvorrichtung 40 in der Vorwärmposition benachbart dem ersten Werkzeug 52 angeordnet ist.

Anschließend erfolgt in Schritt b ein Erwärmen zumindest eines Teilbereichs der Oberfläche des ersten Bauteils 60 mittels der ersten Vorwärmvorrichtung 40. Danach findet in Schritt c ein Verfahren der ersten Vorwärmvorrichtung 40 der Vorwärmanordnung 1 weg vom ersten Werkzeug 52 statt. Hierbei findet gleichzeitig automatisch ein zweites Schwenken der ersten Vorwärmvorrichtung 40 von der Vorwärmposition zurück in die Ausgangsposition statt, bis das Betätigungselement 32 nicht mehr mit dem Auslöseelement 54 in Eingriff steht. Somit umfährt die erste Vorwärmvorrichtung 40 erneut den mindestens einen Hinterschnitt im ersten Bauteil 60.

Zum Schluss findet dann in Schritt f ein Verfahren der Vorwärmanordnung von der Einsatzposition in die Ruheposition statt. Dieses Verfahren kann nach oder gleichzeitig mit dem Verfahren in Schritt c erfolgen.

### Bezugszeichenliste

- 1: Kunststoff-Vorwärmanordnung
- 3: Kunststoffschweißvorrichtung
- 10: Träger
- 20: Schwenk-Struktur
- 22: erste Stelle
- 30: Schwenk-Mechanismus
- 32: Betätigungselement
- 34: zweite Stelle
- 40: erste Vorwärmvorrichtung
- 42: erste Strahlungsquelle
- 44: zweite Strahlungsquelle
- 50: obere Befestigungsplatte
- 52: erstes Werkzeug
- 54: Auslöseelement
- 60: erstes Bauteil
- 62: erster Vorsprung
- 64: zweiter Vorsprung
- 66: dritter Vorsprung
- 70: zweite Vorwärmvorrichtung
- 72: zweites Werkzeug
- 80: Hubtisch

## Patentansprüche

1. Kunststoff-Vorwärmanordnung (1) für eine Kunststoffschweißvorrichtung (3), umfassend:
a. einen Träger (10),
b. mindestens eine erste Vorwärmvorrichtung (40) und
c. eine Schwenk-Anordnung mit der die mindestens eine erste Vorwärmvorrichtung (40) relativ zu einer ersten Oberfläche des Trägers (10) von einer Ausgangsposition in eine Vorwärmposition schwenkbar ist, so dass ein Hinterschnitt eines ersten Bauteils (60) umfahrbar ist und das erste Bauteil (60) mittels der ersten Vorwärmvorrichtung (40) erwärmbar ist.

2. Kunststoff-Vorwärmanordnung (1) gemäß Patentanspruch 1, wobei die Schwenkanordnung eine Schwenk-Struktur (20), an der die mindestens eine erste Vorwärmvorrichtung (40) angeordnet ist, und einen Schwenk-Mechanismus (30) aufweist, wobei die Schwenk-Struktur (20) an mindestens einer ersten Stelle (22) verschwenkbar am Träger (10) angelenkt ist und an einer zweiten Stelle (34) mit dem Schwenk-Mechanismus (30) in Eingriff steht, so dass die mindestens eine erste Vorwärmvorrichtung (40) von der Ausgangsposition in die Vorwärmposition mittels Betätigung des Schwenk-Mechanismus (30) verschwenkbar ist.

3. Kunststoff-Vorwärmanordnung (1) gemäß Patentanspruch 2, wobei die zweite Stelle (34) an einer Seite der Schwenk-Struktur (20) liegt, die verschieden ist von der Seite, an der die Schwenk-Struktur (20) am Träger angelenkt ist.

4. Kunststoff-Vorwärmanordnung (1) gemäß einem der vorhergehenden Patentansprüche, wobei die Schwenk-Anordnung pneumatisch, elektrisch oder mechanisch betätigbar ist.

5. Kunststoff-Vorwärmanordnung (1) gemäß einem der vorhergehenden Patentansprüche, die weiterhin mindestens eine zweite Vorwärmvorrichtung (72) aufweist, die auf einer zweiten der ersten Oberfläche entgegengesetzten Oberfläche des Trägers (10) angeordnet ist.

6. Kunststoff-Vorwärmanordnung (1) gemäß einem der vorhergehenden Patentansprüche, die mindestens zwei erste Vorwärmvorrichtungen (40) aufweist.

7. Kunststoff-Vorwärmanordnung (1) gemäß Patentanspruch 6, die mindestens zwei zweite Vorwärmvorrichtungen (70) aufweist.

8. Kunststoff-Vorwärmanordnung (1) gemäß einem der vorhergehenden Patentansprüche, wobei die mindestens eine erste Vorwärmvorrichtung (40) und/oder zweite Vorwärmvorrichtung (70) eine Infrarot-Vorwärmvorrichtung ist.

9. Kunststoff-Vorwärmanordnung (1) gemäß einem der vorhergehenden Patentansprüche, die einen Hebelmechanismus als Schwenkmechanismus (30) zum Schwenken der ersten Vorwärmvorrichtung (40) aufweist, wobei der Schwenk-Mechanismus (30) ein Betätigungselement (32) umfasst.

10. Kunststoffschweißvorrichtung (3), umfassend:
a. ein erstes Werkzeug (52),
b. ein zweites Werkzeug (72), wobei das erste (52) und das zweite Werkzeug (72) relativ zueinander bewegbar sind, so dass dazwischen angeordnete Bauteile mittels des ersten (52) und des zweiten Werkzeugs (72) verschweißbar sind, sowie
c. eine Kunststoff-Vorwärmanordnung (1) gemäß einem der Patentansprüche 1 bis 9.

11. Kunststoffschweißvorrichtung (3) gemäß Patentanspruch 10, wobei die Kunststoffschweißvorrichtung (3) eine Kunststoff-Reibschweißvorrichtung oder eine Infrarot-Schweißvorrichtung ist.

12. Kunststoffschweißvorrichtung (3) gemäß einem der Patentansprüche 10 oder 11, wobei die Vorwärmanordnung (1) zwischen einer Ruheposition und einer Vorwärmposition bewegbar ist und in der Vorwärmposition ein Bauteil im dazugehörigen Werkzeug erwärmbar ist.

13. Vorwärmverfahren für mindestens ein Bauteil in einer Kunststoffschweißvorrichtung mit Vorwärmanordnung, insbesondere einer Kunststoffschweißvorrichtung gemäß einem der Patentansprüche 10 bis 12, das die Schritte umfasst:
a. Verfahren (a) einer mit einem ersten Werkzeug ausgerichteten ersten Vorwärmvorrichtung der Vorwärmanordnung in Richtung des ersten Werkzeugs, wobei gleichzeitig automatisch ein erstes Schwenken der ersten Vorwärmvorrichtung von einer Ausgangsposition in eine Vorwärmposition relativ zur ersten Oberfläche des Trägers aufgrund einer Schwenk-Anordnung stattfindet, so dass die erste Vorwärmvorrichtung mindestens einen Hinterschnitt im ersten Bauteil umfährt und die erste Vorwärmvorrichtung in der Vorwärmposition benachbart dem ersten Werkzeug angeordnet ist, danach
b. Erwärmen (b) zumindest eines Teilbereichs der Oberfläche des ersten Bauteils mittels der ersten Vorwärmvorrichtung, anschließend
c. Verfahren (c) der ersten Vorwärmvorrichtung der Vorwärmanordnung weg vom ersten Werkzeug, wobei gleichzeitig automatisch ein zweites Schwenken der ersten Vorwärmvorrichtung von der Vorwärmposition zurück in die Ausgangsposition stattfindet, so dass die erste Vorwärmvorrichtung den mindestens einen Hinterschnitt im ersten Bauteil umfährt.

14. Vorwärmverfahren gemäß Patentanspruch 13, das die weiteren Schritte umfasst:
d. Verfahren (d) einer Vorwärmanordnung, insbesondere gemäß einem der Patentansprüche 1 bis 9, vor oder während Schritt a von einer Ruheposition in eine Einsatzposition, so dass die erste Vorwärmvorrichtung auf der ersten Oberfläche des Trägers mit dem ersten Werkzeug der Kunststoffschweißvorrichtung ausgerichtet ist, und
e. Verfahren (e) der Vorwärmanordnung von der Einsatzposition in die Ruheposition frühestens nach Schritt c.

15. Vorwärmverfahren gemäß einem der Patentansprüche 13 bis 14, wobei das automatische Verfahren in Schritt a mittels eines Betätigungselements eines Schwenk-Mechanismus der Schwenk-Anordnung stattfindet, wobei das Betätigungselement ein pneumatisches, ein elektrisches oder vorzugsweise ein mechanisches Betätigungselement ist.

16. Infrarot-Kunststoffschweißvorrichtung, umfassend:
a. ein erstes Werkzeug, das an einem ersten Träger angeordnet ist,
b. ein zweites Werkzeug, das an einem zweiten Träger angeordnet ist, wobei das erste und das zweite Werkzeug relativ zueinander bewegbar sind, so dass dazwischen angeordnete Bauteile mittels des ersten und des zweiten Werkzeugs verschweißbar sind, sowie
c. mindestens eine Schwenk-Anordnung mit der das erste und/oder das zweite Werkzeug relativ zu einer Oberfläche des jeweiligen Trägers von einer Ausgangsposition in eine Vorwärmposition schwenkbar sind, so dass ein Hinterschnitt eines jeweiligen Bauteils umfahrbar ist und das jeweilige Bauteil mittels einer dazugehörigen Vorwärmvorrichtung erwärmbar ist.

17. Infrarot-Kunststoffschweißvorrichtung gemäß Patentanspruch 16, wobei das erste Werkzeug ein Oberwerkzeug ist.
